**Europäisches Patentamt**

**European Patent Office**

**Office européen des brevets**

(19)

(11) Veröffentlichungsnummer: **0 037 376**
**B2**

(12) **NEUE EUROPÄISCHE PATENTSCHRIFT**

(45) Veröffentlichungstag der neuen Patentschrift:
09.05.90

(51) Int. Cl.⁵: **A 23 K 1/00, A 23 K 1/18**

(21) Anmeldenummer: **81810102.4**

(22) Anmeldetag: **17.03.81**

(54) **Verfahren zur Deckung des Energiebedarfs von Tieren und Futtermittel zur Durchführung desselben.**

(30) Priorität: **02.04.80 CH 2600/80**

(43) Veröffentlichungstag der Anmeldung:
**07.10.81 Patentblatt 81/40**

(45) Bekanntmachung des Hinweises auf die
Patenterteilung:
**09.05.90 Patentblatt 90/19**

(45) Bekanntmachung des Hinweises auf die
Entscheidung u¨ber den Einspruch:
**19.10.83 Patenblatt 83/42**

(84) Benannte Vertragsstaaten:
**AT BE CH DE FR GB IT LI LU NL SE**

(56) Entgegenhaltungen:
**BE-C- 574 196**
**CH-A- 456 010**
**DE-A-1 145 903**
**DE-A-2 002 169**
**DE-A-2 209 565**
**FR-A-2 343 432**
**GB-A-2 031 937**

(73) Patentinhaber: **Firma Ernst Böhlen**
**Spitalgasse 15**
**CH-4900 Langenthal (CH)**

(72) Erfinder: **Schaub, Werner**
**Untergasse 104 c**
**CH-4922 Thunstetten (CH)**

(74) Vertreter: **Steiner, Martin et al**
**c/o AMMANN PATENTANWÄLTE AG BERN**
**Schwarztorstrasse 31**
**CH-3001 Bern (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# EP  0 037 376  B2

(56) Entgegenhaltungen:

US-A-2 472 663
US-A-3 892 880
US-A-3 925 560

**REVUE FRANCAISE DES CORPS GRAS, Band 22,
Nr. 6, Juni 1975 Paris, FR J.P. LANG et al.: "Les
corps gras en poudre: préparation, propriétés,
utilisations", Seiten 327-335
FETTE, SEIFEN, ANSTRICHMITTEL, Band 73, Nr.
4, April 1971 LEINFELDEN-ECHTERDINGEN, DE
G. GRÜN: "Verfahren zum vollautomatischen
Herstellen von hochkonzentrierten
Fettgemischen bis zum reinen Fettgranulat",
Seiten 271 bis 273
Journal of Dairy Science, Vol. 61, 1978, S. 49-58
Journal of Dairy Science, Vol. 39, 1956, S. 1461ff**

**Die Akte enthält technische Angaben, die nach
dem Eingang der Anmeldung eingereicht
wurden und die nicht in dieser Patentschrift
enthalten sind.**

## Beschreibung

Die vorliegende Erfindung betrifft ein Verfahren zur Deckung des Energiebedarfs von Tieren, insbesondere Nutz-Säugetieren und Futtermittel zur Durchführung dieses Verfahrens. Es ist bekannt, daß zur Deckung des Energiebedarfs von Wiederkäuern und anderen Nutztieren Fett nur in beschränkter Menge eingesetzt werden kann. Einerseits können übliche Fettarten, deren Schmelzpunkt unter der Körpertemperatur des Tieres liegt, in Mengen von höchstens 5% in der Ration verfüttert werden, weil sonst der Verdauungsprozeß erheblich gestört wird.

Es ist auch bekannt, Emulsionen mit Fettpartikeln in der Größe von 10—50 µm zu verfüttern (CH—PS 456 010, »CORPS GRAS«, Juni 1975, Seiten 327—335). Auch in dieser Form wird jedoch der Verdauungsprozeß in den Vormägen, insbesondere Pansen, im oben erwähnten Sinne gestört wenn erhebliche Menge verfüttert werden.

Der vorliegenden Erfindung liegt die Aufgabe zugrunde, Fette in höheren Mengen zuführen zu können und zwar in einer Form, welche den Verdauungsprozeß nicht stört und doch vollständig resorbierbar ist. Es wird damit beispielsweise möglich, bei Milchivieh in der Laktationsphase die gefürchtete Ketose und die damit verbundenen Folgeerscheinungen wie Fruchtbarkeitsstörungen, geringe Persistenz zu vermeiden, indem eine der Milchleistung angepaßte Energiezufuhr möglich wird. Die erfindungsgemäßte Lösung ist in den Ausprüchen 1 bzw. 3 augegeben. Damit können einerseits die oben erwähnten Nachteile von Fetten, welche im Verdauungstrakt des Tieres die Futterteile mit einem Fettfilm umhüllen, verhindert werden und andererseits wird dank der geringen Teilchengröße eine vollständige Resorption der Fette erzielt. Insbesondere bleiben die Fettpartikel in den Vormägen unverändert, bilden also weder eine Emulsion noch einen Fettfilm, werden aber im Dünndarm verdaut und resorbiert. Es können damit zugesetzte Fettanteile von über 5% in der Ration verfüttert werden. Vorzugsweise werden hydrierte Fette verwendet.

Zur Herstellung eines Futtermittels zur Durchführung des oben erwähnten Verfahrens werden handelsübliche, nach ernährungsphysiologischen Kriterien gewählte Fette wenn nötig auf einen hohen Schmelzpunkt hydriert und dann mit einem Kaltluft-Sprühkristallisationsverfahren in eine feinpartikelige Struktur mit Partikelgrößen von höchstens 50 µm gebracht. Die entstehende pulverförmige Substanz kann in beliebigen Mischungen zusammen mit weiteren Zusätzen wier Mineralsalz-, Vitaminmischungen, Stärke und Proteinkonzentrat verwendet werden, und zwar in weit höheren Mengen als dies mit den bis heute verwendeten Fetten möglich war. Es können z.B. bis 98%ige pulverförmige Fettkonzentrate mit 2% Kieselsäure oder anderen Antikacing-Substanzen als Träger in den Hanel gebracht und verfüttert werden.

Es ist zwar auch bekannt, eine erhöhte Fettzufuhr ohne erherbliche nachteilig Einflüsse auf die Verdauung von Rindvieh dadurch zu ermöglichen, daß sogenanntes »geschütztes Fett« verfüttert wird, das sich dadurch auszeichnet, daß die Fetttröpfchen mit einer Proteinhülle umgeben werden (US—A—3 925 560). Durch Vernetzung der Proteinmoleküle kann verhindert werden, daß die Proteinhülle im Pansenmagen angegriffen wird, während im folgenden Verdauungskanal die Verdauung erfolgen kann. Von diesem bekannten Verfahren unterscheidet sich jedoch das oben beschriebene, anmeldungsgemäße Verfahren grundsätzlich und vorteilhaft.

## Patentansprüche

1. Verfahren zur Deckung des Energiebedarfs von Nutz-Säugetieren, wobei zur Erhöung der Fettanteile auf über 5% in der Ration ausschliesslich Fette mit einem über der Körpertemperatur der Tiere liegenden Schmelzpunkt in Partikeln von höchstens 50 µm Grösse in Trockenform, ohne Emulgatoren, zugesetzt werden.

2. Verfahren nach Anspruch 1, dadurch gekennzeichnet, dass hydrierte Fette zugesetzt werden.

3. Ausschließlich zur Durchführung des Verfahrens nach Anspruch 1, zur Verfütterung ausschliesslich in Trockenform bestimmtes, einen Fettanteil von über 5% aufweisendes Futtermittel wobei der über 5% liegende Fettanteil ausschliesslich aus Fetten mit einem über der Körpertemperatur der Tiere liegenden Schmelpunkt, in Partikeln von höchstens 50 µm Grösse, ohne Emulgatoren, besteht.

4. Futtermittel nach Anspruch 3, dadurch gekennzeichnet, dass es hydriertes Fett enthält.

5. Futtermittel nach Anspruch 3 oder 4, dadurch gekennzeichnet, dass es Mineralsalz-, Vitaminmischungen, Stärke und Proteinkonzentrate als Zusätze enthält.

## Revendications

1. Procédé pour couvrir les besoins énergétiques des mammifères domestiques, dans lequel, pour l'augmentation de la teneur en graisse à plus que 5% de la ration, exclusivement des graisses à point de fusion plus élevé que la température corporelle des animaux, en particules de 50 µm au maximum, en forme sèche et sans émulsifiants sont ajoutées.

2. Procédé selon la revendication 1, caractérisé en ce que l'on ajoute des graisses hydrogénées.

3. Fourrage destiné exclusivement à la mise en oeuvre du procédé selon la revendication 1 et à être fourragé exclusivement en forme sèche, ayant une teneur en graisse dépassant 5%, la partie grasse dépassant 5% consistant exclusivement en graisses à point de fusion plus élevé que la température corporelle des animaux en particules de 50 µm au maximum et sans émulsifiants.

4. Fourrage selon la revendication 3, caractérisé en ce qu'il contient de la graisse hydrogénée.

5. Fourrage selon la revendication 3 ou 4, caractérisé en ce qu'il contient des mélanges de sels minéraux et de vitamines, de l'amidon et des concentrés de protéines comme additifs.

**Claims**

1. A method for covering the energy need of domestic mammalia, wherein, in order to increase the fat content of the ration to more than 5%, fats are added having a melting point which is higher than the animals' body temperature, in particles of 50 µm maximum size, in dry form, without emulsifiers, exclusively.

2. A method according to claim 1, characterized in that hydrogenated fats are added.

3. A forage exclusively destined for implementation of the method according to claim 1, and for feeding in dry form exclusively, having a fat content exceeding 5%, wherein the fat content exceeding 5% consists exclusively of fats having a melting point which is above the body temperature of the animals, in particles of 50 µm maximum size, without emulsifiers.

4. A forage according to claim 3, characterized in that it contains hydrogenated fat.

5. A forage according to claims 3 or 4, characterized in that it contains mineral salt and vitamin mixtures, starch, and protein concentrates as additives.